(19) Europäisches Patentamt
European Patent Office
Office européen des brevets

(11) **EP 2 270 540 A2**

(12) **EUROPÄISCHE PATENTANMELDUNG**

(43) Veröffentlichungstag:
**05.01.2011 Patentblatt 2011/01**

(51) Int Cl.:
***G01S 13/90*** *(2006.01)*    *G01S 15/89* *(2006.01)*
***G01S 17/89*** *(2006.01)*

(21) Anmeldenummer: **10006559.8**

(22) Anmeldetag: **23.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **23.06.2009 DE 102009030076**

(71) Anmelder: **Symeo GmbH**
**85579 Neubiberg (DE)**

(72) Erfinder:
- **Max, Stephan, Dr.**
  **38518 Neubokel/Gifhorn (DE)**
- **Gulden, Peter, Dr.**
  **80636 München (DE)**
- **Vossiek, Martin, Dr.**
  **31139 Hildesheim (DE)**

(74) Vertreter: **Schulze, Mark**
**Von Lieres Brachmann Schulze**
**Patentanwälte**
**Grillparzerstrasse 12A**
**81675 München (DE)**

(54) **Abbildungsverfahren mittels synthetischer Apertur, Verfahren zur Bestimmung einer Relativgeschwindigkeit zwischen einem wellenbasierten Sensor und einem Objekt bzw. Vorrichtung zur Durchführung der Verfahren**

(57) Die Erfindung bezieht sich insbesondere auf ein Abbildungsverfahren zur Abbildung oder zur Lokalisierung eines Objektes (O) mit einem wellenbasierten Sensor (SS), bei dem von dem Objekt von zumindest einer Objektposition ($\mathbf{P}(r)=\mathbf{P}_{O1}=(x_{O1},y_{O1},z_{O1})^T$) ein Wellenfeld als ein Objektsignal (os) ausgeht und dieses von zumindest einem Sensor an zumindest einer Sensorposition ($\mathbf{a}_n=(x_n, y_n, z_n)^T$) empfangen wird und dabei Sensoren und Objekt eine Anzahl (M) von räumlichen Positionen zueinander einnehmen und eine synthetische Apertur bilden und an jeder dieser Sensorpositionen ein Echosignal ($\mathbf{e}_n$) aufgenommen wird, aus den Echosignalen eine Anzahl (M) Funktionswerte entnommen wird, die basierend auf einer angenommen Aufnahmegeometrie und unter Berücksichtigung der Wellenausbreitungsvorgänge einer Raumkoordinate ($\mathbf{r}=(x,y,z)^T$) des Objekts zugeordnet sind, und aus den Funktionswerten ein Signal ($e_r(n)$) mit einem Restphasenverlauf ($\varphi_r(n)$) gebildet wird. Das Signal weist einen bestimmbaren, deterministischen und nicht konstanten Restphasenverlauf auf, der von einer Abweichung realer Sensorpositionen ($\mathbf{a}_{n\_real}$) von angenommenen oder gemessenen Sensorpositionen ($\mathbf{a}_n$) herrührt. Auf diesem Restphasenverlauf beruhend wird ein Bildpunkt ($b(x,y,z)$), die Objektposition oder die Relativbewegung des Objektes bestimmt.

Fig. 1

**Beschreibung**

Abbildungsverfahren mittels synthetischer Apertur, Verfahren zur Bestimmung einer Relativgeschwindigkeit zwischen einem wellenbasierten Sensor und einem Objekt bzw. Vorrichtung zur Durchführung der Verfahren

Die Erfindung bezieht sich auf ein Abbildungsverfahren mit synthetischer Apertur und mit den oberbegrifflichen Merkmalen gemäß Anspruch 1, auf ein darauf beruhendes Verfahren zur Bestimmung einer Relativgeschwindigkeit zwischen einem wellenbasierten Sensor und einem Objekt bzw. auf eine Vorrichtung zur Durchführung der Verfahren.

Verfahren auf Basis einer sogenannten synthetischen Apertur (SA) mittels insbesondere Radartechnik werden eingesetzt, um ein Abbild eines Objektes zu erstellen, beispielsweise ein Erdoberflächenabbild zu erstellen. Ein allgemeines Prinzip von SA-Systemen ist für einen Wellenbereich von Mikrowellen z.B. im Fachbuch "H. Radar mit realer und synthetischer Apertur" von Klausing und W. Holpp, Oldenbourg, 2000, Kapitel 8, S. 213 ff., oder in "M. Younis, C. Fischer, and W. Wiesbeck, "Digital beamforming in SAR systems", Geoscience and Remote Sensing, IEEE Transactions on, vol. 41, pp. 1735-1739, 2003, ausführlich dargestellt. Bekannt sind SA-Verfahren auch aus z.B. WO 2006/072471, DE 199 10 715 C2 oder EP 0 550 073 B1. Im Bereich der Radarsensorik spricht man in diesem Zusammenhang von SAR (Synthetic Aperture Radar) oder auch SDRS (Software-Defined Radar Sensors).

Nahezu identische Verfahren sind im Bereich der Medizin oder Ultraschallmesstechnik seit langem unter den Begriffen Holographie bzw. Tomographie bekannt und beispielsweise beschrieben in M. Vossiek, V. Mägori, and H. Ermert, "An Ultrasonic Multielement Sensor System for Position Invariant Object Identification", presented at IEEE International Ultrasonics Symposium, Cannes, France, 1994, oder M. Vossiek, "Ein Ultraschall-Mehrwandlersystem zur lageunabhängigen Objekterkennung für die industrielle Automation", Fortschritt-Berichte VDI, Reihe 8: Mess-, Steuerungs- und Regelungstechnik, vol. 564, 1996.

Allgemein bekannt ist, dass SA-Verfahren mit allen kohärenten Wellenformen, z.B. im Radarbereich mit elektromagnetischen Wellen und im medizinischen Bereich der Ultraschallwellen mit akustischen Wellen, durchgeführt werden können. Auch Signale von Wellenquellen, deren Verlauf und Kohärenz der Empfänger nicht kennt, können mit SA-Verfahren verarbeitet werden, wenn man aus an zumindest zwei räumlich getrennten Orten empfangenen Signalen ein Signal bildet, das nicht mehr die Absolutphase sondern Phasendifferenzen der Signale beschreibt, ist bekannt aus z.B. DE 195 12 787 A1.

Bekannt ist außerdem eine Vielzahl von Sekundärradarverfahren, wie sie z.B. beschrieben sind in DE 101 57 931 C2, DE 10 2006 005 281, DE 10 2005 037 583, in Stelzer,A., Fischer,A., Vossiek,M.: "A New Technology for Precise Position Measurement-LPM", Microwave Symposium Digest, 2004, IEEE MTT-S International, Vol.2, 6-11 June 2004, S.655-658, oder in R. Gierlich, J. Huttner, A. Ziroff, and M. Huemer, "Indoor positioning utilizing fractional-N PLL synthesizer and multi-channel base stations", Wireless Technology, 2008, EuWiT 2008, European Conference on, 2008, pp. 49-52, oder in S. Roehr, P. Gulden, and M. Vossiek, "Precise Distance and Velocity Measurement for Real Time Locating in Multipath Environments Using a Frequency-Modulated Continuous-Wave Secondary Radar Approach", IEEE Transactions on Microwave Theory and Techniques, vol. 56, pp. 2329-2339, 2008.

Außerdem bekannt sind in der technischen Realisierung verwendete Transformationen. Geeignete Waveletoder Zeit-Frequenz-Transformationen liefert z.B. Shie Qian, "Introduction to Time-Frequency and Wavelet Transforms", Prentice Hall 2001. Spektralauswerteverfahren wie FFT (Fast Fourier Transformation) und zeitbereichsbasierte Verfahren sind beschrieben in z.B. S. L. Marple, Jr., "A tutorial overview of modern spectral estimation", Acoustics, Speech, and Signal Processing, 1989, ICASSP-89, 1989 International Conference on, 1989, pp. 2152-2157 vol.4.

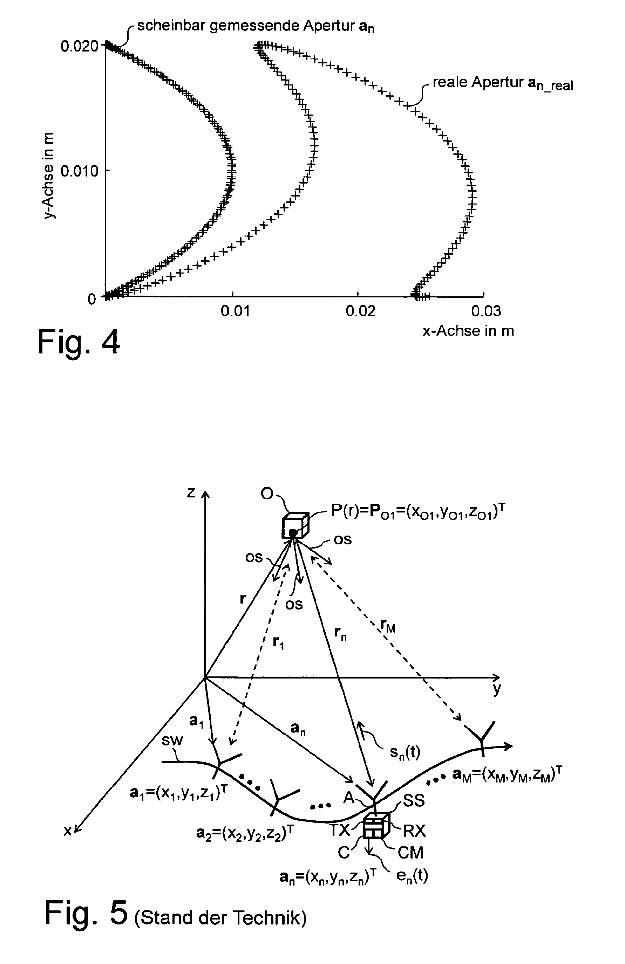

Für das Verständnis der SA-Verfahren von Bedeutung ist für die nachfolgenden Darstellungen insbesondere das sogenannte breitband-holographische Abbildungsverfahren. Eine Erläuterung einer Aufnahmesituation eines Bildes mittels des breitband-holographischen Abbildungsverfahrens erfolgt anhand Fig. 5.

Dargestellt ist ein in einem kartesischen Koordinatensystem x, y, z feststehend angeordnetes Objekt O. Bestimmt werden soll eine Raumkoordinate $\mathbf{r}$ des Objektes O bzw. ein Bildpunkt von dessen Oberfläche innerhalb des Koordinatensystems x, y, z. Ein Punkt der Oberfläche des Objektes O, insbesondere ein Streupunkt P oder ein Transponder, strahlt als passiver bzw. als aktiver Sender ein Objektsignal os ab. Bestimmt werden soll demgemäß eine Objektposition $\mathbf{P(r)}=\mathbf{P}_{O1}=(x_{O1},y_{O1},z_{O1})^T$ des Objektes O bzw. von dessen Transponder oder Streupunkt P.

Dazu wird ein Sensor SS längs einer Sensorbahn sw bzw. Sensor-Bewegungstrajektorie bewegt. Der Sensor umfasst eine Antenne A und einen Empfänger RX, welche das Objektsignal os erfassen, welches von dem Streupunkt P oder Transponder sowohl über einen direkten Weg $\mathbf{r}_n$ als auch zu einem späteren Zeitpunkt zeitlich versetzt eintreffend über Echos bzw. Umwege zu der Antenne A gelangt. Das über die Antenne A zu einer Zeit t empfangene Signal wird mittels eines Prozessors C verarbeitet und als Empfangssignal, das auch als Echoprofil oder Echosignal $\mathbf{e}_n(t)$ bezeichnet wird, ausgegeben. Es ist allgemein bekannt, dass Werte über einer Zeitachse mit der Zeit t als Variabler des Echosignals $\mathbf{e}_n(t)$ über seine Ausbreitungsgeschwindigkeit in Werte einer Entfernungsachse, d.h. mit Ortskoordinaten als Variablen umgerechnet werden können.

Die Aufnahme erfolgt dabei zeitlich aufeinanderfolgend an verschiedenen scheinbaren Sensorpositionen $\mathbf{a}_n=(x_n, y_n, z_n)^T$ mit n als Element der Anzahl 1, 2, ... n, ... M der Sensorpositionen $\mathbf{a}_n$, so dass mittels synthetischer Apertur ein räumliches Bild des Objektes O erzeugt werden kann.

Allgemein bekannt ist dabei, dass der Sensor SS auch einen Sender TX aufweist, welcher ein Sendesignal $s_n$(t) in insbesondere Richtung des Objekts O sendet. Das über direkte und indirekte Wege am Objekt O ankommende Sendesignal $s_n$(t) wird dann vom Objekt O als das Objektsignal os abgesendet.

Die Datenaufnahme erfolgt somit derart, dass zumindest ein Radargerät ein Signal von der scheinbaren Sensorposition $\mathbf{a}_n=(x_n,y_n,z_n)^T$ in Richtung einer Objektszene emittiert. An einem Punktstreuer des Objektes O an der Objektposition $\mathbf{P(r)}=\mathbf{P}_{O1}=(x_{O1},y_{O1},z_{O1})^T$ soll dieses Radarsignal dann gestreut und/oder reflektiert werden. Aus Gründen der Überschaubarkeit wird zunächst davon ausgegangen, dass das Radargerät das vom Objekt O zurückreflektierte Objektsignal os an der selben scheinbaren Sensorposition $\mathbf{a}_n$ empfängt. Eine Übertragung auf eine Anordnung mit getrennten Sende- und Empfangsantennen wäre z.B. mit Hilfe der oben aufgeführten Literatur leicht möglich. Ein derartiger Messvorgang wird von M verschiedenen scheinbaren Mess- bzw. Sensorpositionen $\mathbf{a}_n$ mit $n=1...M$ durchgeführt. Folglich führt die Messung zu einer Gruppe von M unterschiedlichen Mess- bzw. Echosignalen $e_n(t)$ bzw. dazu gehörigen Echospektren $E_n(\omega)$.

Die wahre und durch die Messung in idealer Weise zu bestimmende Position des Transponders bzw. des Streupunkts sei die Objektposition $\mathbf{P(r)} = \mathbf{P}_{O1}=(x_{O1},y_{O1},z_{O1})^T$.

Für eine kompakte Darstellung wird nachfolgend von weiteren Vereinfachungen ausgegangen. Ein Messbereich in dem sich das Objekt O aufhalten kann, sei auf einen Raumbereich begrenzt, in dem sichergestellt ist, dass das Objekt O von allen scheinbaren Sensorpositionen $\mathbf{a}_n$ vom Radargerät bzw. Sensor SS erfasst werden kann. Außerdem wird im Folgenden von einem gleichförmigen, konstanten und nicht richtungsabhängigen Richtverhalten aller Antennen ausgegangen.

Die Basis zur Modellierung eines durch die Messwege $\mathbf{r}_n$ gebildeten Übertragungskanals sei ein idealer AWGN-Kanal (AWGN: Additive White Gaussian Noise / additives weißes Gauss'sches Rauschen). D.h. das vom Sensor SS empfangene Echosignal $e_n(t)$ kann mit einem Modell beschrieben werden, bei dem sich das Echosignal $e_n(t)$ als lineare Superposition einer Vielzahl P von amplitudengewichteten und zeitverzögerten Sende- bzw. Objektsignalen os ergibt, wobei ein Index p die verschiedenen Übertagungswege, d.h. den direkten Weg und sogenannte Multipath-Umwege, vom Radargerät bzw. Sensor SS zum Objekt O und zurück bezeichnet. Dann gilt für das Echosignal $e_n(t)$

$$e_n(t) = \alpha_n \cdot \sum_{p=1}^{P} \alpha_p \cdot s(t - \tau_n - \tau_p) + n(t) \ .$$

Dabei sei $\alpha_n$ eine für den direkten Messweg $\mathbf{r}_n$ charakteristische Direktweg-Dämpfung, insbesondere Direktweg-Dämpfungskonstante, wobei $\alpha_p$ zudem die über die normale Direktweg-Dämpfung $\alpha_n$ hinausgehende Dämpfung für jeden der p Übertragungswege berücksichtigen soll.

Außerdem sei $\tau_n$ eine charakteristische Direktweg-Signallaufzeit für den direkten Messweg $\mathbf{r}_n$, d.h. die Signallaufzeit des direkten, kürzesten Wegs vom Radargerät bzw. Sender TX zum Objekt O und zurück. Zudem soll $\tau_p$ mögliche Laufzeitverlängerungen aufgrund von Mehrfachreflexionen für jeden der p Übertragungswege berücksichtigen. Für den Laufindex p = 1, d.h. für den direkten Messweg $\mathbf{r}_n$ gilt dabei als Laufzeitverlängerung $\tau_p = 0$.

Außerdem beschreibt $n(t)$ additiv überlagerte Störungen in Form von AWGN.

Wird diese Gleichung zum Übertragungsmodell in den Frequenzbereich transformiert, so ergibt sich das Echospektrum

$$E_n(\omega) = \alpha_n \cdot \sum_{p=1}^{P} \alpha_p \cdot S(\omega) \cdot e^{-j \cdot \omega \cdot \tau_n} \cdot e^{-j \cdot \omega \cdot \tau_p} + N(\omega) \ .$$

Dabei ist $S(\omega)$ das Sendespektrum des Sendesignals s(t) und $N(\omega)$ das Rauschspektrum der AWGN. Die Direktweg-Signallaufzeit $\tau_n$ zu einer beliebigen Raumkoordinate $\mathbf{r}=(x,y,z)^T$ und zurück berechnet sich gemäß

$$\tau_n = \frac{2 \cdot |\mathbf{r}_n|}{c}$$

*und*

$$\left|\mathbf{r}_n\right| = \left|\mathbf{r} - \mathbf{a}_n\right| = \sqrt{(x-x_n)^2 + (y-y_n)^2 + (z-z_n)^2}$$

wobei c eine Ausbreitungsgeschwindigkeit der Welle ist.

Ein sogenannter "breitband-holographischer Rekonstruktionsalgorithmus" basiert auf einer Technik einer Optimalfilterung. Zur Berechnung eines Bildpunktes b(x,y,z) am Objekt O wird das gemessene Empfangs- bzw. Echospektrum $E_n(\omega)$ mit einer theoretisch idealen Funktion $F_n(\mathbf{a}_n,\mathbf{r},\omega)$ korreliert, wobei die ideale Funktion $F_n(\mathbf{a}_n,\mathbf{r},\omega)$ einen Streupunkt P bzw. einen Punktstreuer, der sich irgendwo in der Objektszene befindet, an der Raumkoordinate $\mathbf{r} = (x,y,z)^T$ von der scheinbar gemessenen Sensorposition $\mathbf{a}_n=(x_n,y_n,z_n)^T$ betrachtet erzeugen würde. Diese Korrelation bzw. Vergleichsfunktion liefert einen umso größeren Wert, je mehr das Empfangssignal bzw. Echosignal $e_n(t)$ dem theoretischen Signal ähnelt.

Ein große Ähnlichkeit der Signale liegt dann vor, wenn sich an der Position der Raumkoordinate $\mathbf{r}$ tatsächlich ein Punktstreuer befindet, also der angenommene Bildpunkt $b(\mathbf{r})$ tatsächlich der realen Reflektor-Position $\mathbf{P}_{TP1}=(x_{TP1}, y_{TP1},z_{TP1})^T$ des als dem Streupunkt P am Objekt O angenommenen Reflektors entspricht.

Durch Summation der Korrelationsergebnisse für alle M direkten Messwege $\mathbf{r}_1,...\mathbf{r}_n,...\mathbf{r}_M$ ergibt sich eine Art Wahrscheinlichkeitswert, der aussagt, ob an der Position der Raumkoordinate $\mathbf{r}$ ein Punktstreuer, d.h. eine reflektierende und/oder streuende Objektstruktur vorhanden bzw. nicht vorhanden ist. Die Rekonstruktionsvorschrift lautet somit

$$b(x,y,z) = \left| \sum_{n=1}^{M} \int_{\omega} E_n(\omega) \cdot F_n^{-1}(\mathbf{a}_n, \mathbf{r} = (x,y,z,)^T, \omega)\, d\omega \right|.$$

Das hier zum Signalvergleich nach Art einer Korrelation gewählte inverse Filter der idealen Funktion $F_n^{-1}$ entspricht bezüglich des exponentiellen Ausbreitungsterms einem sogenannten Matched-Filter-Ansatz, d.h. einer Multiplikation mit dem konjugiert komplexen Signal, also mit $F_n^*(\mathbf{a}_n,\mathbf{r},\omega)$.

Basierend auf dem zuvor beschriebenen Übertragungsmodell und unter Vernachlässigung der additiven Störungen n(t) und unter Vernachlässigung von Mehrfachreflexionen, ergibt sich das Signal eines fiktiven Punktstreuers an der Raumkoordinate $\mathbf{r}$ zu der idealen Funktion

$$F_n(\mathbf{a}_n,\mathbf{r},\omega) = \alpha_n \cdot S(\omega) \cdot e^{-j\cdot\omega\cdot\tau_n} .$$

Im Weiteren wird noch angenommen, dass das Sendesignal $S(\omega) = 1$ ist, was ohne Einschränkung der Allgemeingültigkeit möglich ist, da etwaige nicht-ideale Eigenschaften des Sendesignals im spektralen Übertragungsbereich des Sensorsystems durch den oben dargestellten Ansatz des inversen idealen Filters in für sich bekannter Art und Weise kompensiert werden könnten.

Setzt man diese Signalhypothese nun in die oben eingeführte Rekonstruktionsvorschrift ein, so folgt

$$b(x,y,z) = \left| \sum_{n=1}^{M} \frac{1}{\alpha_n} \int_{\omega} E_n(\omega) \cdot e^{j\cdot\omega\cdot\tau_n}\, d\omega \right| .$$

Es ist erkennbar, dass das Integral über die sogenannte Kreisfrequenz $\omega$ einer inversen Fouriertransformation entspricht und somit das Empfangssignal bzw. das Echosignal $e_n(t)$ zum Zeitpunkt $t=\tau_n$ liefert. Die endgültige für sich bekannte allgemeine Rekonstruktionsvorschrift lautet demzufolge

$$b(x, y, z) = \left| \sum_{n=1}^{M} e_n(t = \tau_n) \right|$$

und wird als breitband-holographische Rekonstruktionsformel bezeichnet.

Anzumerken ist, dass etwaige reelle Empfangssignale vor der Summation zu einem komplexen Signal erweitert werden, um so eine Hüllkurve der Bildfunktion, also eine Art "Helligkeitsfunktion" bestimmen zu können. Die Berechnung des komplexen Signals kann vorzugsweise mit Hilfe der sogenannten Hilbert-Transformation erfolgen.

Der gewonnene Ausdruck lässt sich sehr anschaulich interpretieren. Befindet sich tatsächlich ein Streukörper an der Position der Raumkoordinate $\mathbf{r}$, so tritt sein Antwortsignal in den Echosignalen $\mathbf{e}_n(t)$ jeweils beim Zeitpunkt bei t = $\tau_n$ auf. Durch die laufzeitrichtige Summation über die M Messwege werden seine Signalbeiträge durch die Rekonstruktionsvorschrift kohärent überlagert, so dass sich ein großer Wert für b(x,y,z) ergibt. Etwaige Signalanteile anderer, nicht in der Raumkoordinate $\mathbf{r}$ positionierter Streukörper, Signalanteile von Mehrwegereflexionen oder Rauschen überlagern sich dagegen wegen der nicht konsistenten Laufzeiten inkohärent und führen somit zu einem wesentlich kleineren Bildsignal. Um sicher sein zu können, dass eine inkohärente Superposition mehrerer Echosignale $\mathbf{e}_1(t) + ... + \mathbf{e}_n(t) + ... + \mathbf{e}_M(t)$ zu einer deutlich kleineren Amplitude führt als eine kohärente Überlagerung, ist zu fordern, dass die Anzahl M der Messpunkte zumindest größer oder gleich 2 ist, vorzugsweise aber sogar deutlich größer als 2 ist.

Es ist allgemein bekannt, dass die M Mess- bzw. Sensorpunkte $\mathbf{a}_n=(x_n,y_n,z_n)^T$ durch mehrere Radargeräte und /oder durch bewegen zumindest eines Radar-Sensors längs der Sensorbahn sw erzeugt werden können.

Wie auch bei dem dargestellten Ansatz basieren alle für sich bekannten SA-Verfahren darauf, dass Signale von mehreren M Messungen basierend auf einem Übertragungs- und Aufnahme- bzw. Bewegungsmodell phasenabhängig überlagert werden.

Damit eine SA-Bildgebung funktioniert, ist es nach den bekannten SA-Verfahren und auch bei dem dargestellten breitband-holographischen Verfahren zwingend notwendig, dass die Koordinaten der Sensorpositionen $\mathbf{a}_n=(x_n,y_n,z_n)^T$ sehr exakt mit der Wirklichkeit übereinstimmen, da andernfalls eine laufzeit- und phasenrichtige kohärente Überlagerung nicht mehr möglich ist. Eine typische Anforderung ist, dass die Abweichung aller angenommen Sensorpositionen $\mathbf{a}_n$ von den tatsächlichen Sensorpositionen $\mathbf{a}_{n\_real}$ sehr viel kleiner sein muss, als die Wellenlänge der verwendeten Echosignale $\mathbf{e}_n(t)$.

Eine für sich bekannte sehr attraktive Variante zur Implementierung eines SA-Sensors SS besteht darin, einen oder ggf. auch mehrere wellenbasierte Sensoren SS auf einem Fahrzeug, z.B. auf einem Auto, Lastkraftwagen, Flugzeug, Schienenfahrzeug, Gabelstapler, Roboter, Hubgestänge, Hebezeug, Transportsystem oder autonomen Fahrzeug zu befestigen und die ohnehin vorhandene Bewegung des Fahrzeuges auszunutzen, um eine synthetische Apertur aufzuspannen und die Vielzahl der M räumlich verteilen Messungen durchzuführen. Um aber die Koordinaten der zu den jeweiligen Messzeitpunkten scheinbar momentanen Sensorpositionen $\mathbf{a}_n=(x_n,y_n,z_n)^T$ hinreichend exakt zu kennen, ist es notwendig, dass der Weg des Fahrzeugs als die Sensorbahn sw sehr exakt vermessen wird. Eine derart exakte Messung auf einen Bruchteil der Wellenlänge der verwendeten Sendesignale s(t) ist aber mit einem erheblichen Aufwand verbunden bzw. oft gar nicht möglich. Ein Grund kann z.B. ein beim Fahren mit Gabelstaplern häufig auftretender Schlupf oder ein seitliches Überrollen von Rädern sein. Ein anderer beispielhafter Grund können Integrationsfehler sein, die häufig bei Verwendung von Beschleunigungs- oder Geschwindigkeitssensoren auftreten, da bei diesen Sensoren der zurückgelegte Weg über eine einfache bzw. zweifache Integration bestimmt werden muss oder aber bei Doppler-Sensoren wegen eines unbekannten und/oder variierenden Nickwinkels des Sensors.

Neben diesen Messfehlern bei der Bestimmung der eigenen Position des Radars kommt in dem Fall, in dem die M Messungen nacheinander durchgeführt werden, bei der Abbildung von bewegten Objekten noch ein anderes Problem hinzu. Wie in den obigen Ausführungen zu sehen ist, bezieht sich die Sensorposition $\mathbf{a}_n=(x_n,y_n,z_n)^T$ des Sensors SS auf einen Punktstreuer des Objektes O an einem festen Ort $\mathbf{P(r)}=\mathbf{P}_{O1}=(x_{O1}.y_{O1},z_{O1})^T$. Bewegt sich das Objekt O jedoch während der M Messungen, so müsste diese zusätzliche Relativbewegung in der Bildrekonstruktion bzw. in den gemessenen scheinbaren Sensorpositionen $\mathbf{a}_n=(x_n,y_n,z_n)^T$ berücksichtigt werden.

Nun sieht eine allgemeine Messsituation in einer natürlichen Umgebung häufig so aus, dass der wellenbasierte Sensor SS viele Objekte O mit teilweise unterschiedlichen Geschwindigkeiten wahrnimmt. Fährt ein Gabelstapler oder ein autonomes Fahrzeug oder ein Roboter, der einen Sensor SS mit sich führt, z.B. durch eine Produktionshalle, so kann er neben den ortsfesten Anlagen, Einbauten und Gebäudeteilen ggf. auch laufende Personen oder andere sich bewegende Fahrzeuge wahrnehmen.

Mit den bekannten SA-Verfahren ist es jedoch nicht möglich, alle diese Objekte mit unterschiedlicher Relativgeschwindigkeit zum Sensor SS qualitativ gleichwertig abzubilden.

Die Aufgabe der vorliegenden Erfindung ist es, dieses erhebliche technische Problem mittels der praktischen Anwendung von SA-Verfahren zu lösen. Abgeleitet aus dieser Lösung soll sich vorzugsweise auch ein Verfahren ergeben, wie ein Fahrzeug ausgestattet mit einem wellenbasierten Sensor mit Hilfe derartiger SA-Verfahren dann seine Relativ-Geschwindigkeit bzw. seine relative Wegänderung zu anderen Objekten bestimmen kann.

Diese Aufgabe wird durch das Abbildungsverfahren mittels synthetischer Apertur zwischen einem wellenbasierten Sensor und einem Objekt mit den Merkmalen des Patentanspruchs 1, durch das darauf basierende Verfahren zur Bestimmung einer Relativgeschwindigkeit zwischen dem wellenbasierten Sensor und dem Objekt mit den Merkmalen des Patentanspruchs 14 bzw. durch die Vorrichtung mit den Merkmalen des Patentanspruchs 15 gelöst.

Bereitgestellt werden somit ein Abbildungsverfahren mit synthetischer Apertur, das auf einer Auswertung von Restphasenabweichungen beruht, sowie basierend darauf ein Verfahren zur Bestimmung einer Relativgeschwindigkeit zwischen einem wellenbasierten Sensor und einem Objekt bzw. eine Vorrichtung zur Durchführung der Verfahren. Vorteilhafte Ausgestaltungen sind Gegenstand von abhängigen Ansprüchen.

Bevorzugt wird insbesondere ein Abbildungsverfahren zur Abbildung oder zur Lokalisierung eines Objektes mit einem wellenbasierten Sensor mittels synthetischer Apertur, bei dem von dem Objekt von zumindest einer Objektposition ein Wellenfeld als ein Objektsignal ausgeht, wobei das Objektsignal erzeugt wird, indem entweder das Objekt mit zumindest einer Wellenquelle bestrahlt wird und das Objekt als Reaktion dieses Wellenfeld reflektiert oder streut oder indem das Objekt selbständig eine Welle emittiert, und dieses vom Objekt ausgehende Objektsignal von dem zumindest einen Sensor an zumindest einer Sensorposition empfangen wird und dabei der Sensor bzw. die Sensoren und das Objekt eine Anzahl von zumindest zwei räumlichen Positionen relativ zueinander einnehmen und dadurch die synthetische Apertur bilden und an jeder dieser Sensorpositionen durch den Sensor ein Echosignal aufgenommen wird, aus den Echosignalen eine Anzahl größer 1 mehrerer der Echosignale gebildet wird, bei denen der Amplituden- und/oder der Phasenverlauf eine Funktion einer Signallaufzeit oder einer Signallaufzeitdifferenz oder eine Funktion einer Entfernung oder einer Entfernungsdifferenz zwischen dem Objekt und zumindest einem der Sensoren ist, und aus dieser Anzahl größer 1 der Echosignale zumindest ein Funktionswert je Echosignal entnommen wird, wobei die entnommenen Funktionswerte einer angenommenen Raumkoordinate des Objekts zugeordnet sind. Vorteilhaft wird ein solches Verfahren dadurch, dass die Anzahl der entnommen Funktionswerte der Echosignale an deren angenommenen Sensorpositionen einen bestimmbaren, deterministischen und nicht konstanten Restphasenverlauf aufweist, der von einer Abweichung realer Sensorpositionen von angenommenen oder gemessenen Sensorpositionen herrührt und/oder von einer Bewegung des Objektes herrührt, und dass dieser Restphasenverlauf analysiert oder kompensiert wird und auf dem Ergebnis der Analyse oder der Kompensation zumindest ein Bildpunkt des Objektes oder die Objektposition des Objektes oder die Relativbewegung des Objektes bestimmt oder geschätzt wird.

Unter der Objektposition kann die Position des Objektes als Ganzem verstanden werden, aber auch nur eine Position eines Punktes, insbesondere ein Reflexions- oder Streupunktes oder einer Transponderantenne an dem Objekt verstanden werden.

Die Begriffe Sensor und Empfänger können insoweit synonym verwendet werden, als dass unter einem Sensor eine Einrichtung verstanden wird, welche zumindest Komponenten eines Empfängers aufweist und mit ggfs. zusätzlichen Komponenten eines Empfängers in festem Bezug steht.

Der Sensor bewegt sich ggfs. über eine insbesondere unbekannte Sensorbahn. Unter deterministisch ist ein physikalisch fester Zusammenhang zu verstehen, welcher für den Phasenverlauf zumindest des größten Anteils der jeweils betrachteten Echosignale gemeinsam gilt und insbesondere durch eine geschlossene Formel beschreibbar ist.

Ein Echosignal kann auch nur über den direkten Weg gelaufene Wellen- oder Signalanteile umfassen.

Unter einer Analyse wird insbesondere die Anwendung einer Fouriertransformation oder Frequenzschätzung oder eine Zeit-Frequenzanalyse verstanden. Unter einer Kompensation wird insbesondere eine Differentiation des Restphasenverlaufs verstanden.

Bevorzugt wird ein solches Verfahren, bei dem der Determinismus des Restphasenverlaufs darin besteht, dass er sich linear mit der Zeit oder dem Index ändert, oder dass die entnommenen Funktionswerte eine sinusförmige Funktion beschreiben und dass mit einem Frequenzanalyseverfahren eine Amplitude und/oder eine Frequenz und/oder die Phase der sinusförmigen Funktion bestimmt wird. Ausgenutzt wird dabei die überraschende Erkenntnis, dass eine lineare Phase der Echospektren, was mathematisch betrachten gleichbedeutend mit einem sinusförmigen Verlauf der zugrundeliegenden Funktionswerte ist, auf einfache Art und Weise mit einem Frequenzanalyseverfahren auswertbar ist.

Bevorzugt wird dabei aus der Amplitude der sinusförmigen Funktion ein Wahrscheinlichkeitswert bestimmt, der aussagt, ob von der Raumkoordinate des Objekts ein Wellenfeld ausgeht oder nicht.

Aus der Frequenz der sinusförmigen Funktion kann dann die Relativbewegung zwischen dem Objekt und dem zumindest einen Sensor bestimmt werden.

Bevorzugt wird insbesondere ein solches Verfahren, bei dem eine Phasendifferenz von zumindest 2 der entnommenen Funktionswerte gebildet wird und diese Phasendifferenz zum Bestimmen der Relativbewegung zwischen dem Objekt und dem zumindest einen Sensor verwendet wird.

Eine Fourier-Transformation kann im Rahmen der Analyse der entnommenen Funktionswerte oder von deren Phasenverläufen angewendet werden, was eine einfache Berechnung ermöglicht.

Dabei kann zum Rekonstruieren oder zum Schätzen der Bildpunkte und/oder der räumlichen Driftgeschwindigkeit eines Offsets zwischen dem Objekt und dem zumindest einen Sensor die Fouriertransformation auf zumindest einen Teil von Messwerten von zumindest zwei verschiedener der Echosignale angewendet werden und ein Maximum davon bestimmt werden, wobei dies insbesondere durchgeführt wird gemäß

$$b(x, y, z) = \max \left\{ \left| FFT \left\{ e_n(t = \tau_n) \right\} \right| \right\} .$$

Dies ist insbesondere vorteilhaft einsetzbar für den Fall, in dem eine Driftbeschleunigung und ein Driftruck und insbesondere alle höheren nicht-linearen Driftkomponenten gleich Null sind, falls es also nur eine lineare Driftkomponente, nämlich die Geschwindigkeit gibt. Trotz einer Drift kann so ein scharfes Bild des Objekts bestimmt werden.

Bevorzugt wird ein solches Verfahren, bei dem der Restphasenverlauf der Anzahl entnommener Funktionswerte differenziert wird und dadurch aus den entnommenen Funktionswerten neue Funktionswerte gebildet werden und aus den neu gebildeten Funktionswerten solche Bildpunkte oder ein Bild oder die Objektposition oder die Relativbewegung des Objektes bestimmt wird. Dabei kann die Differentiation des Restphasenverlaufes solange wiederholt werden, bis sich ein linearer oder konstanter Phasenverlauf in den neu gebildeten Funktionswerten einstellt.

Vorteilhaft ist eine Vielzahl derartiger Verfahrensweisen, bei denen der Determinismus des Phasenverlaufs darin besteht, dass der Phasenverlauf der Echosignale und eine Phase aufweist, wobei sich die Phase entsprechend einem quadratischen oder kubischen Funktionsverlauf mit der Zeit ändert oder wobei die entnommenen Funktionswerte eine linear oder quadratisch frequenzmodulierte Funktion beschreiben, und dass mit einem mathematischen Analyseverfahren zumindest ein den Funktionsverlauf charakterisierender Parameter bestimmt wird, z.B. ein Koeffizient eines Polynoms, das den Phasenverlauf beschreibt, z.B. der Koeffizient des linearen oder des quadratischen oder des kubischen Anteils dieses Polynoms.

Die Messungen an den Sensorpositionen werden bevorzugt in einem konstanten Zeitabstand mit einer Abtastzeit durchgeführt.

Eine reale Sensorposition kann bestimmt werden aus einer Summe einer scheinbar gemessenen Sensorposition und einem Offset $\mathbf{B}(n)$, wobei der Offset $\mathbf{B}(n)$ als Funktion einer scheinbar gemessenen n-ten Sensorposition durch den Funktionsverlauf charakterisierender Parameter beschrieben ist gemäß insbesondere

$$\mathbf{B}(n) = \mathbf{x_0} + \mathbf{v_0} \cdot n + \frac{1}{2} \mathbf{a_0} \cdot n^2 + \frac{1}{3} \mathbf{r_0} \cdot n^3 + ...$$

mit $\mathbf{x}_0$ als einem Offset für den ersten Aperturpunkt bzw. für die erste Sensorposition, $\mathbf{v}_0$ als einer Driftgeschwindigkeit, $\mathbf{a}_0$ als einer Driftbeschleunigung und $\mathbf{r}_0$ als einem Driftruck.

Die analysierten Echosignale können von sowohl zumindest zwei verschiedenen scheinbar gemessenen Sensorpositionen als auch zumindest zwei verschiedenen Objektpositionen erfasst werden.

Ein solches Verfahren ist besonders geeignet zur Bestimmung einer Relativgeschwindigkeit zwischen dem Sensor und dem Objekt als der Relativbewegung oder einer Bewegungskomponente davon.

Bevorzugt wird eigenständig insbesondere eine Vorrichtung mit einem wellenbasierten Sensor zum Aufnehmen einer Abfolge von Echosignalen eines Objektes und mit einer Logik und/oder mit einem auf zumindest ein Programm zugreifenden Prozessor, wobei die Logik und/oder der Prozessor ausgestaltet sind zur Durchführung eines derartigen Verfahrens. Typisch für eine solche Anordnung mit SA-Verfahren ist ein Speicher, in dem die Werte der Anzahl größer 1 mehrerer der Echosignale gespeichert werden.

Insbesondere ist eine solche Vorrichtung mit einem Speicher oder einer Schnittstelle zu einem Speicher ausgestattet, wobei in dem Speicher das Programm gespeichert ist. In für sich bekannter Art und Weise kann eine solche Anordnung als Logik Hardware-Komponenten aufweisen, welche durch geeignete Verdrahtung oder integrierten Aufbau zur Durchführung erforderlicher Programme ausgelegt sind. Umsetzbar ist auch die Verwendung eines Prozessors einschließlich eines Prozessors eines über z.B. eine Schnittstelle angeschlossenen Computers, um ein geeignetes Programm auszuführen, welches zugreifbar gespeichert ist. Möglich sind auch kombinierte Lösungen aus fester Hardware und einem Prozessor.

Ein Ausführungsbeispiel wird nachfolgend anhand der Zeichnung näher erläutert, wobei bezüglich anhand des Standes der Technik beschriebener Aspekte auf die vorstehenden Ausführungen verwiesen wird. Es zeigen:

Fig. 1    eine Messsituation mit einem sich im Raum bewegenden Objekt und einer Sensorbahn, längs derer verteilt Mess- bzw. Sensorpunkte eines oder mehrerer wellenbasierter Sensoren angeordnet sind,

Fig. 2 schematisch zur Bestimmung erforderliche Komponenten im Falle eines sich im Bezugsraum bewegenden Objektes und eines sich bewegenden Sensors,

Fig. 3 schematisch zur Bestimmung erforderliche Komponenten im Falle eines im Bezugsraum feststehend angeordneten Objektes und eines sich bewegenden Sensors,

Fig. 4 beispielhaft eine gemessene und eine reale Apertur, wie sie verfahrensgemäß bestimmbar ist, und

Fig. 5 gemäß dem Stand der Technik eine Messsituation mit einem im Raum feststehend angeordneten Objekt und einer Sensorbahn, längs derer verteilt Mess- bzw. Sensorpunkte eines oder mehrerer wellenbasierter Sensoren angeordnet sind.

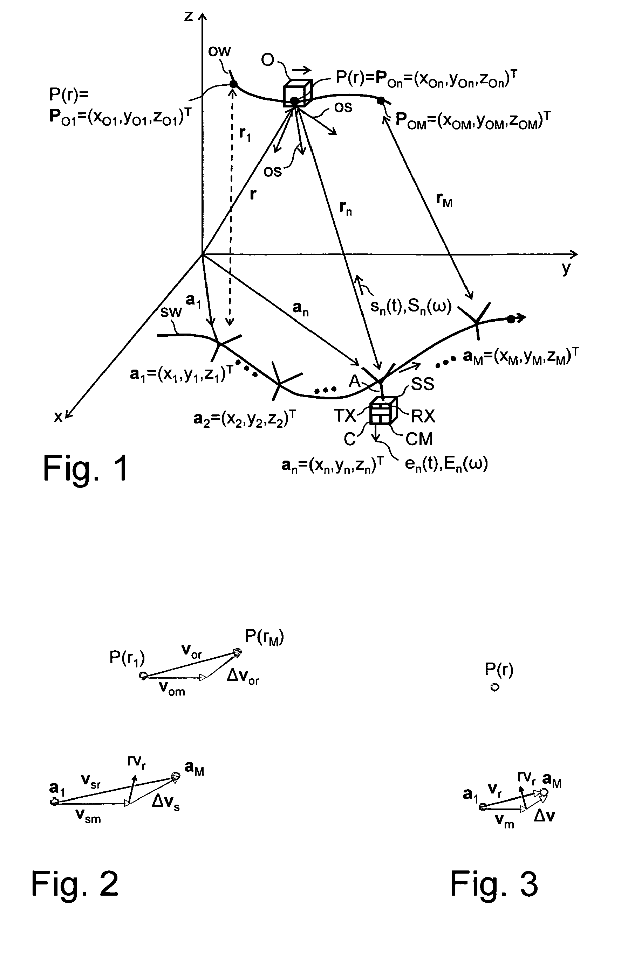

Fig. 1 zeigt ergänzend zu Fig. 5 zusätzlich Komponenten und Verfahrensgrößen, welche sich aus einer Bewegung des Objektes O ergeben, welches sich gleichzeitig zu einer dazu verschiedenartigen Bewegung des Sensors SS im Bezugsraum, hier dem kartesischen Koordinatensystem x, y, z bewegt. Bezüglich in Fig. 1 dargestellter Komponenten und Größen wird hier daher ergänzend Bezug genommen auf die umfassende Beschreibung zu Fig. 5 und die Herleitung der breitband-holographischen Rekonstruktionsformel.

Wie dies aus Fig. 1 ersichtlich ist, bewegt sich das Objekt O mit dem Streupunkt P oder mit einem Transponder längs einer Objektbahn ow. Der Streupunkt P oder der Transponder nimmt entsprechend über die Zeit t hinweg verschiedene Objektpositionen $\mathbf{P}(r) = (\mathbf{P}_{01} = (x_{O1}, y_{O1}, z_{O1})), ..., (\mathbf{P}_{On} = (x_{On}, y_{On}, z_{On})), ..., (\mathbf{P}_{OM} = (x_{OM}, y_{OM}, z_{OM}))$ ein.

Entsprechend ändern sich innerhalb des Bezugsraums, d.h. z.B. des kartesischen Koordinatensystems x, y, z, insbesondere bei gleichzeitig mit der Zeit t bewegtem Sensor SS die direkten Messwege $\mathbf{r}_1, ..., \mathbf{r}_n, ..., \mathbf{r}_M$ zwischen den Objektpositionen $\mathbf{P}(r(t))$ und den gemessenen scheinbaren Sensorpositionen $\mathbf{a}_1 = (x_1, y_1, z_1)^T, ..., \mathbf{a}_n = (x_n, y_n, z_n)^T, ..., \mathbf{a}_M = (x_M, y_M, z_M)^T$.

Eine Speichereinrichtung CM im Sensor SS dient zum Speichern von gemessenen oder durch den Prozessor oder sonstigen Komponenten verarbeiteten Daten, insbesondere den empfangenen Objektsignalen os, den Empfangsprofilen $\mathbf{e}_n(t)$ oder daraus bestimmten Daten. Außerdem oder alternativ kann in der Speichereinrichtung CM ein Programm zum Veranlassen des Sensors SS, insbesondere dessen Prozessors C zur gewünschten Datenverarbeitung gespeichert sein.

Um insbesondere bei einem solchen Bewegungsmodell trotzdem eine Bestimmung der Objektpositionen $\mathbf{P}(r(t))$ zu ermöglichen, wird zunächst das für sich bekannte SA-Aufnahme und Bewegungsmodell erweitert. Die nachfolgenden Ausführungen werden in Form von Geschwindigkeits-Betrachtungen dargestellt. Eine Überführung der Darstellung in andere Bewegungsgrößen wie Beschleunigungsgrößen oder Weggrößen ist natürlich entsprechend möglich.

Wie dies in Fig. 2 dargestellt ist, bewegt sich der wellenbasierte Sensor SS entlang der Sensorbahn sw als einer Sensor-Trajektorie mit einer vektoriellen Sensor-Momentangeschwindigkeit $\mathbf{v}_{sr}$. Das Objekt SS bzw. der jeweilige Streukörper auf dem Objekt SS bewegt sich entlang der Objektbahn ow als einer Objekt-Trajektorie mit einer vektoriellen Objekt-Momentangeschwindigkeit $\mathbf{v}_{or}$.

Wie in Fig. 3 zu sehen ist, setzen sich die vektoriellen Sensor- bzw. Objekt-Momentangeschwindigkeiten $\mathbf{v}_{sr}$ bzw. $\mathbf{v}_{or}$ aus einem bekannten, z.B. gemessenen Sensor- bzw. Objekt-Anteil $\mathbf{v}_{sm}$ bzw. $\mathbf{v}_{om}$ und aus einem unbekannten Sensor- bzw. Objekt-Anteil $\Delta\mathbf{v}_s$ bzw. $\Delta\mathbf{v}_o$ zusammen. Der unbekannte Sensor- bzw. Objekt-Anteil $\Delta\mathbf{v}_s$ bzw. $\Delta\mathbf{v}_o$ ist z.B. aufgrund von Messfehlern oder aufgrund fehlender Informationen unbekannt.

Da bei SA-Verfahren nur die Relativbewegungen relevant sind, können die Bewegungsvektoren von Sensor SS und Objekt O durch Vektor-Subtraktion zu einem gemeinsamen Relativbewegungsvektor zusammengefasst werden. Die momentane Relativgeschwindigkeit $\mathbf{v}_r$ setzt sich wiederum aus einem bekannten relativen Anteil $\mathbf{v}_m$ und aus einem unbekannten relativen Anteil $\Delta\mathbf{v}$ zusammen. Der unbekannte relative Anteil $\Delta\mathbf{v}$ ist die Störgröße, die ohne die hier bevorzugte Verfahrensweise zu einem Versagen bei der Bildbestimmung führen würde.

Bei der Rekonstruktion eines Bildpunktes z.B. auf Basis der oben genannten breitband-holographischen Rekonstruktionsformel würden bei der unveränderten Berechnung die Aperturstützpunkte, d.h. gemessene scheinbare Sensorpositionen $\mathbf{a}_n(t)$ angenommen, die durch den bekannten Geschwindigkeitsvektor $\mathbf{v}_m$ und den Messzeitpunkt bzw. der dann momentanen Zeit t vorgegeben werden. Diese Aperturstützpunkte weichen aber von den tatsächlichen Aperturstützpunkten ab, da von dem Geschwindigkeitsvektor dessen unbekannter relativer Anteil $\Delta\mathbf{v}$ unberücksichtigt bleibt, da der unbekannte relative Anteil $\Delta\mathbf{v}$ zunächst nicht bekannt ist. Neben der Abweichung durch die Aperturstützpunkte kann verfahrensgemäß auch ein unbekannter relativer Geschwindigkeitsvektor zwischen einem bewegten Objekt O mit verschiedenen Objektpositionen $\mathbf{P}(r)$ und den Aperturstützpunkten bestimmt werden, obwohl dabei aufgrund der verschiedenen Objektpositionen $\mathbf{P}(r)$ die Kohärenz verloren geht.

Nach der Rekonstruktionsformel nach der breitband-holographischen Abbildung wird eine Anzahl M von komplexen Funktionswerten $e_n(t = \tau_n)$ der Echosignale $e_n(t)$, die aus der Anzahl M der Echosignale $\mathbf{e}_n(t)$ jeweils bei der Direktweg-Signallaufzeit $\tau_n$ entnommen wurden, aufsummiert. Diese einfache Aufsummierung ist bei Vorhandensein eines unbekannten Geschwindigkeitsvektors Δ**v** nicht mehr zulässig bzw. führt zu unbrauchbaren Ergebnissen.

Abweichend davon wird nun vorgeschlagen, diese Anzahl M komplexer Funktionswerte $e_n(t=\tau_n)$ der Anzahl M der Echosignale **e**$_n$(t) andersartig auszuwerten, um so trotz des unbekannten Geschwindigkeitsvektors als unbekanntem relativem Anteil Δ**v** von der momentanen Relativgeschwindigkeit **v**$_r$ zu gültigen Ergebnissen zu kommen. Zur weiteren Darstellung wird die Anzahl M der komplexen Amplitudenwerte der Anzahl M der Funktionswerte $e_n(t=\tau_n)$ zunächst zu einem Signal $e_r(n)$ zusammengefasst. Es gilt hierbei für das Signal

$$e_r(1) = e_1(t = \tau_1), e_r(2) = e_2(t = \tau_2), \quad \ldots \; , \; e_r(M) = e_M(t = \tau_M) \; .$$

Mit dieser Signaldefinition vereinfacht sich die oben genannte allgemein bekannte breitband-holographische Rekonstruktionsvorschrift zu

$$b(x, y, z) = \left| \sum_{n=1}^{M} e_r(n) \right| \; .$$

Das Signal $e_r(n)$ ist im allgemeinen komplexwertig und lässt sich daher auch in Betrag und Phase zerlegt wie folgt darstellen.

$$e_r(n) = \left| e_r(n) \right| \cdot e^{j \cdot \varphi_r(n)}$$

Die Phase $\varphi_r(n)$ wird im folgenden Restphase bzw. Restphasenverlauf genannt.

Wie aus den vorangegangenen Ausführungen ersichtlich ist, haben das Signal $e_r(n)$ und somit auch die Restphase $\varphi_r(n)$ im Allgemeinen für jeden Bildpunkt b(x,y,z) einen anderen Verlauf. Als Hypothese wird ein Punktstreuer an vorgegebenen Koordinaten des Koordinatensystems (x,y,z) angenommen. Falls diese angenommenen Koordinaten mit einer tatsächlichen Position Punktstreuers bzw. Objekts O mit der Position **P(r)**=**P**$_{O1}$=$(x_{O1}, y_{O1}, z_{O1})^T$ übereinstimmt und u.a. auch eine angenommene Geometrie, welche die Signallaufzeiten bestimmt, ideal mit der Wirklichkeit übereinstimmt, ist die Restphase $\varphi_r(n)$ eine Konstante. Die komplexen Zeiger des Signals $e_r(n)$ würden sich daher in diesem Fall bei Summation konstruktiv überlagern, der Bildpunkt b(x,y,z) hätte dann eine hohe Amplitude. Für den Fall, dass sämtliche die Signallaufzeit bestimmenden Größen ideal korrekt angenommen wurden, wäre die Restphase $\varphi_r(n)$ für alle der Anzahl M der Punkte sogar identisch Null. Jede Abweichung zwischen den Annahmen und der tatsächlichen Messsituation führt zu einer Variation des Restphasenverlaufes $\varphi_r(n)$.

Wie in Fig. 2 und 3 schon angedeutet wurde, kann auch eine krummlinige Bewegungstrajektorie für die Anzahl M der Aperturpunkte, d.h. der angenommenen Sensorpositionen **a**$_n$=$(x_n, y_n, z_n)^T$ und der Objektpositionen **P(r)** = **P**$_{On}$, durch einen linearen Bewegungsvektor angenähert werden, wenn durch die lineare Approximation nur Geometrie-Fehler hervorgerufen werden, deren Abmessungen klein gegenüber der Wellenlänge der Messsignal sind. Sogar wenn dies nicht der Fall ist, kann der zumindest der unbekannte Geschwindigkeitsvektor in Form des unbekannten relativen Anteils Δ**v** des Geschwindigkeitsvektors häufig mit hinreichender Genauigkeit als linearer Bewegungsvektor angenähert werden, sofern durch die lineare Approximation des unbekannten Geschwindigkeitsvektors nur Geometrie-Fehler hervorgerufen werden, deren Abmessungen klein gegenüber der Wellenlänge der Messsignal sind. Der unbekannte Geschwindigkeitsvektor bzw. unbekannte relative Anteil Δ**v** kann stets in zwei Komponenten zerlegt werden von denen eine in Richtung der Wellenausbreitung, d.h. in Richtung des direkten Weges **r**$_n$ zeigt und eine andere, die senkrecht dazu steht.

Die Komponente in Richtung des direkten Weges **r**$_n$ wird nachfolgend als radiale Relativgeschwindigkeit rv$_r$ bezeichnet. Unter Annahme eines konstanten linearen Bewegungsvektors bewirkt diese radiale Relativgeschwindigkeit rv$_r$, das sich die Restphase $\varphi_r(n)$ des Signals $e_r(n)$ von Punkt zu Punkt linear ändert. Nimmt man nun noch an, dass die Anzahl M der Messungen in konstanten Zeitabständen durchgeführt wurden, so ist ersichtlich, dass das Signal $e_r(n)$ eine sinusförmige Schwingung beschreibt.

Ist die radiale Relativgeschwindigkeit rv$_r$ gleich Null, ist die Frequenz dieser Schwingung gleich Null. In diesem Sonderfall ist die ursprüngliche Form der SA-Algorithmen und somit auch die oben genannte breitband-holographische Rekonstruktionsformel anwendbar.

Bei einer radialen Relativgeschwindigkeit rv$_r$ ungleich Null ist auch die Frequenz der Schwingung ungleich Null und proportional zur radialen Relativgeschwindigkeit rv$_r$. Als vorteilhaft wird daher verfahrensgemäß vorgeschlagen, die Anzahl M der Sensorpositionen bzw. Abtastpunkte des Signals $e_r(n)$ nicht wie üblich einfach aufzusummieren, sondern die Fourier-Transformation von ihnen zu berechnen.

Bevorzugt wird hierzu eine sogenannte schnelle Fourier-Transformation (FFT) verwendet. In einem ersten Schritt wird das Maximum des Betrages des resultierenden Fourier-Spektrums bestimmt. Das Maximum des Betrages des Fourierspektrums liefert dann ähnlich der üblichen breitband-holographischen Rekonstruktionsformel einen Wahrscheinlichkeitswert. Der Wahrscheinlichkeitswert gibt an, ob sich an der Position der Raumkoordinate **r** ein Punktstreuer bzw. das Objekt O befindet oder nicht. Die dementsprechende neuartige Bildrekonstruktionsformel lautet für den Bildpunkt

$$b(x, y, z) = \max\left\{\left|FFT\left\{e_r(n)\right\}\right|\right\}$$

und stellt eine erweiterte breitband-holographische Rekonstruktionsformel dar. Alternativ zur Bestimmung des Maximums könnten auch andersartige Maße bestimmt werden, die von der Leistung bzw. der Amplitude des Signals abhängen. Der Mittelwert oder die Leistung des Betragsspektrums sind Beispiele für Maße die ebenfalls geeignet wären, einen Wahrscheinlichkeitswert im oben genannten Sinne zu bilden.

Nun lässt sich aber aus dem Maximum des resultierenden Fourier-Spektrums $FFT\{e_r(n)\}$ nicht nur ein für die Bildgebung geeigneter Wahrscheinlichkeitswert ableiten, sondern auch der unbekannte relative Anteil $\Delta\mathbf{v}$ des Geschwindigkeitsvektors $\mathbf{v}_n$. Die Lage des Maximums im Spektrum liefert zusätzlich die Frequenz der Schwingung und somit unmittelbar einen skalaren Messwert für die unbekannte radiale Relativgeschwindigkeit $rv_r$ zwischen dem Sensor SS und dem Objektpunkt $\mathbf{P}(\mathbf{r})$. Folglich kann über das vorgeschlagene Auswertungsprinzip nun jedem Bildpunkt b(x,y,z) eine radiale Relativgeschwindigkeit $rv_r$ zugeordnet werden.

Durch das dargestellte Verfahren wird eine Bildpunktbestimmung insbesondere auch bei bewegtem Objekt und zugleich bewegten Sensorpositionen, sowie eine Korrektur einer fehlerhaft beschriebenen Apertur ermöglicht. Bewegte Objekte O können unverfälscht abgebildet werden, auch wenn ihre Bewegung a priori nicht bekannt ist, und auch Fehler bei der angenommenen Bewegungsgeschwindigkeit des wellenbasierten Sensors SS können toleriert werden.

Nun ist es nicht zwangsläufig notwendig, dass das Signal $e_r(n)$ einen linearen Restphasenverlauf $\varphi_r(n)$ hat und daher eine sinusförmige Schwingung beschreibt. Ausreichend ist für das bevorzugte Verfahren, wenn der Restphasenverlauf $\varphi_r(n)$ irgendeinem bestimmbaren Determinismus folgt und die Parameter dieses Determinismus bestimmt und dann so verarbeitet werden, dass sie einen Wahrscheinlichkeitswert liefern, der aussagt, ob von der Raumkoordinate $\mathbf{r}=(x,y,z)^T$ ein Wellenfeld ausgeht oder nicht, oder der aussagt, ob die Raumkoordinate $\mathbf{r}=(x,y,z)^T$ zum Bestimmen der Relativbewegung zwischen Objekt und Empfänger verwendet werden kann.

In dem Fall, in dem das Signal $e_r(n)$ eine sinusförmige Schwingung beschreibt, sind die Parameter bzw. Funktionswerte des Determinismus zum einen die Amplitude der sinusförmigen Funktion, die einen Wahrscheinlichkeitswert liefert, der aussagt, ob von der Raumposition an der Raumkoordinate $\mathbf{r}=(x,y,z)^T$ ein Wellenfeld ausgeht oder nicht, und zum anderen die Frequenz der sinusförmigen Funktion, die zum Bestimmen der Relativbewegung zwischen dem Objekt O und Empfänger RX des Sensors SS verwendet wird.

Zur Bestimmung der unbekannten Relativbewegung, insbesondere der unbekannten Relativgeschwindigkeit $rv_r$ zwischen dem Objekt O und Empfänger RX bzw. dem Sensor SS reicht es, auch eine Phasendifferenz $\Delta\varphi$ von zumindest 2 der Anzahl M Restphasenwerte zu bilden, also

$$\Delta\varphi = \varphi_r(k) - \varphi_r(l)$$

mit $k=1...M$; $l=1...M$; $k\neq l$. Diese Phasendifferenz $\Delta\varphi$ ist unmittelbar ein Maß für die Abweichung zwischen einerseits der realen Geometrie und andererseits der bei der Entnahme von Funktionswerten der verschiedenen Funktionswerte $e_n$ $(t=\tau_n)$ der Echosignale $\mathbf{e}_n(t)$ angenommenen Geometrie.

Die Phasendifferenz $\Delta\varphi$ liefert auch unmittelbar den zwischen der Messung der zumindest zwei Echosignale $\mathbf{e}_n$ zurückgelegten radialen Weg, den der für das Objekt O rekonstruierte Bildpunkt b(x,y,z) und der Sensor SS während der Anzahl M der Messungen relativ zueinander zusätzlich zur angenommenen Bewegung zurückgelegt haben. Die zurückgelegte Entfernung ist proportional zu $\Delta\varphi$ multipliziert mit der Wellenlänge des Sendesignals.

Im Folgenden wird ein in der Praxis häufig anzutreffender Fall dargestellt. Synthetische Aperturen werden oft über die Bewegung von Fahrzeugen oder über technische Einrichtungen, z.B. Roboterarme, Schrittmotoren oder Linearantriebe erzeugt. Sensoren SS zur Geschwindigkeits- oder Positionserfassung bei derartigen Fahrzeugen oder Maschinen sind häufig mit Fehlern behaftet, die sich bei der Datenverarbeitung aufintegrieren, also mit der Zeit immer größer werden. Abhängig vom verwendeten Sensor SS wachsen diese Fehlergrößen mit der Zeit häufig linear, quadratisch oder kubisch.

Ausgegangen wird nun von einer synthetischen Apertur mit der Anzahl M der räumlichen Stützpunkte bzw. scheinbar gemessenen bzw. angenommenen Sensorpositionen $a_n$. Tatsächliche, d.h. reale Apertur- bzw. Sensorpositionen $a_{n\_real}$, welche eine Apertur aufspannen, weichen jedoch wegen der zuvor genannten Messfehler von scheinbar gemessenen Sensorpositionen $a_n$ um einen unbekannten Offset $B(n)$ ab. Die reale Apertur bzw. die reale Sensorposition $a_{n\_real}$, mit der die Messung durchgeführt wurde, ist daher definierbar zu

$$a_{n\_real} = a_n + B(n). \quad (1)$$

Wird ferner davon ausgegangen, dass die Messungen an den scheinbaren Sensorpositionen $a_n$ in einem konstanten Zeitabstand, nämlich mit einer Abtastzeit $T_a$, durchgeführt werden. Der Offset $B(n)$ kann dann als Funktion des Index n mittels beispielsweise der folgenden Bewegungsgleichung beschrieben werden:

$$B(n) = x_0 + v_0 \cdot n + \frac{1}{2} a_0 \cdot n^2 + \frac{1}{3} r_0 \cdot n^3 + \dots \quad (2)$$

Hierbei bezeichnet als den Funktionsverlauf charakterisierender Parameter beispielsweise $x_0$ einen Offset für den ersten Aperturpunkt bzw. für die erste angenommene Sensorposition $a_1$, $v_0$ eine Driftgeschwindigkeit, $a_0$ eine Driftbeschleunigung und $r_0$ einen Driftruck, d.h. eine Beschleunigungsänderung des Systems. Da der erste Aperturpunkt, d.h. die erste angenommene Sensorposition $a_1$ frei im Raum gewählt wird, kann zumeist die Festlegung

$$x_0 = 0 \quad (3)$$

getroffen werden.

In Fig. 4 ist eine beispielhafte gemessene und reale Apertur für die Driftbeschleunigung $a_0 = 0$ und den Driftruck $r_0 = 0$ dargestellt. Hierbei ist deutlich eine lineare Drift erkennbar. Mittels der Driftbeschleunigung $a_0$, dem Driftruck $r_0$ etc. kann das Driftverhalten auch beliebig nicht-linear modelliert werden.

Wie schon dargestellt wurde, können für den Fall in dem die Driftbeschleunigung $a_0$ und der Driftruck $r_0$ und alle höheren nicht-linearen Driftkomponenten gleich Null sind, falls es also nur eine lineare Driftkomponente, nämlich die Geschwindigkeit $v_0$ gibt, mit der erweiterten breitband-holographischen Rekonstruktionsformel

$$b(x, y, z) = \max \left\{ \left| FFT \left\{ e_r(n) \right\} \right| \right\}$$

trotz der Drift ein scharfes Bild aus den Bildpunkten b(x,y,z) rekonstruiert und auch die räumliche Geschwindigkeit $v_0$ geschätzt werden.

Es wird der Zusammenhang zwischen der Drift und der Beschleunigungskomponente als Determinismus bestimmt. Dieser Determinismus kann in einer veränderten Rekonstruktionsformel nach dem oben dargestellten Grundprinzip berücksichtigt werden. Dies kann wie folgt geschehen:

Wie oben ausgeführt wurde, ergibt sich unter Annahme eines konstanten linearen Bewegungsvektors, dass sich die Restphase $\varphi_r(n)$ von Punkt zu Punkt linear mit der Zeit t, bzw. dem Index n, ändert. Bei einer gleichmäßig beschleunigten Bewegung ändert sich die Restphase $\varphi_r(n)$ von Punkt zu Punkt nicht linear mit der Zeit t, sondern quadratisch. Die Ableitung der Restphase $\varphi_r(n)$ nach der Zeit, d.h. also die Differenz der Restphasendifferenz von Punktepaar zu Punktepaar, ändert sich in diesem Fall linear.

Eine mögliche und sinnvolle Verarbeitung des Signals $e_r(n)$ kann daher in diesem Fall wie folgt aussehen. Zunächst zerlegt man das Signal $e_r(n)$, wie schon oben dargestellt wurde, in Betrag und Phase:

$$e_r(n) = |e_r(n)| \cdot e^{j \cdot \varphi_r(n)} \, .$$

Basierend auf der Anzahl M der Abtastpunkte des Signals $e_r(n)$ wird ein abgeleitetes Signal mit einer um Eins reduzierten Anzahl M-1 neuer Abtastpunkte wie folgt gewonnen:

$$\left| e'_r(n) \right| = \frac{1}{2} \left( |e_r(n)| + |e_r(n)| \right)$$

$$\arg\left\{ e'_r(n) \right\} = \arg\left\{ e_r(n+1) \right\} - \arg\left\{ e_r(n) \right\} \, .$$

mit

$$e'_r(n) = \left| e'_r(n) \right| \cdot e^{j \cdot \arg\left\{ e'_r(n) \right\}}$$

Die Ableitung der Phase des diskreten Signals kann auch wie folgt dargestellt durchgeführt werden:

$$e'_r(n) = e_r(n+1) \cdot e_r(n)^{*}$$

Dabei kennzeichnet der Stern "*" das konjugiert komplexe Signal. Um die bei dieser Operation hervorgerufenen Quadrierung der Amplituden zu vermeiden, kann das Signal $e'_r(n)$ auch wie folgt gewonnen werden:

$$\left| e'_r(n) \right| = \sqrt{\left| e_r(n+1) \cdot e_r(n)^{*} \right|}$$

$$\arg\left\{ e'_r(n) \right\} = \arg\left\{ e_r(n+1) \cdot e_r(n)^{*} \right\}$$

Unabhängig davon mit welcher der zuvor genannten Varianten das Signal $e'_r(n)$ bestimmt wurde, lautet die neue erweiterte breitband-holographische Rekonstruktionsformel, die auch bei beschleunigten Bewegungen anwendbar ist, dann

$$b(x, y, z) = \max\left\{ \left\| FFT\left\{ e'_r(n) \right\} \right\| \right\} \, .$$

Bei dieser Verfahrensweise wird also der Bildpunkt b(x,y,z) nicht aus dem Abstand, sondern aus der Geschwindigkeit und/oder der Driftbeschleunigung $a_0$ bestimmt.
Nachvollziehbar ist, dass dieses Vorgehen sukzessive auch für höhere nicht-lineare Bewegungskomponenten, z.B. bei Vorhandensein einer von Null verschiedenen Komponente wie dem Driftruck $\mathbf{r}_0$ wiederholt werden kann. Die Restphase $\varphi_r(n)$ muss eben nur entsprechend oft abgeleitet werden.

Wenn die Ausführungen genau betrachtet werden, kann eine weitere interessante Option abgeleitet werden.

Wenn es sich bei der Driftbewegung um eine lineare Bewegung handelt, ändert sich die Restphase $\varphi_r(n)$ von Punkt zu Punkt linear mit der Zeit t. Die abgeleiteten Restphasenwerte, also arg$\{e'_r(n)\}$, sind demzufolge konstant. Folglich kann unter Annahme einer rein linearen Bewegungsdrift nun auch wieder die klassische Rekonstruktionsformel - nun aber angewendet auf die abgeleiteten Echosignale $e'_r(n)$ anstatt auf die Echosignale $e_r(n)$ - verwendet werden. Eine sinnvolle Bildrekonstruktionsvorschrift lautet daher

$$b(x,y,z) = \left| \sum_{n=1}^{M-1} e'_r(n) \right| \cdot$$

Es ist nachvollziehbar, dass dieses Vorgehen sukzessive auch für höhere nicht-lineare Bewegungskomponenten, z.B. bei

Vorhandensein einer von Null verschiedenen Komponente wie dem Driftruck $\mathbf{r}_0$ wiederholt werden kann. Der Restphasenverlauf $\varphi_r(n)$ wird eben nur entsprechend oft abgeleitet, und zwar genau einmal öfter abgeleitet, als bei der Rekonstruktionsformel bei der die Fourier-Transformation anstatt der einfachen Summe verwendet wird.

Für beide Fälle sollte jedoch beachtet werden, dass die Ableitung des Restphasenverlaufs $\varphi_r(n)$ stets zu einem Informationsverlust führt und sich ein scharfes leicht interpretierbares Bild b(x,y,z) dann ggf. nur noch für einzelne dedizierte Reflektoren bzw. Objekte O im Aufnahmebereich und ggf. nur bei nicht geradlinig verlaufenden Aperturen ergibt. Für wellenbasierte Sensoren SS, die zu passiv reflektierenden Zielen als solchen Objekten O messen, z.B. im Fall von Primärradargeräten, kann dies im Normalfall ein Problem darstellen. Für wellenbasierte Sensoren SS, die zu kooperativen Zielen bzw. zu Transpondern an solchen Objekten O messen, z.B. im Fall von Sekundärradargeräten, ist das Problem durch Kodierung der Antwortsignale leicht zu umgehen.

Diese Art der Rekonstruktion, bei der die Ableitung des Restphasenverlaufes $\varphi_r(n)$ genutzt wird, kann als ein Spezialfall des hier dargestellten Konzepts aufgefasst werden. Im hier dargestellten allgemeinen Fall entfällt die Einschränkung, dass nämlich die Ableitung der Phase stets zu einem Informationsverlust führt, da durch die Verwendung der FFT bzw. aller anderen nachfolgend vorgeschlagenen Verfahren, auf die Ableitung der Phase verzichtet werden kann.

Auf die Ableitung des Restphasenverlaufes $\varphi_r(n)$ kann auch bei Bewegungen, die Komponenten höherer Ordnung, z.B. die Driftbeschleunigung $\mathbf{a}_0$ oder den Driftruck $\mathbf{r}_0$ haben, komplett verzichtet werden, wenn anstatt der Fourier-Transformation eine Transformation verwendet wird, die nicht von sinusförmigen Funktionen ausgeht.

In diesem Zusammenhang sind insbesondere eine sogenannte Wavelet-Transformation (Wellen-Transformation) und andere Zeit-Frequenz-Transformationen geeignet, welche nicht zwingend Integral-Transformationen sein müssen. Ein geeignetes Mutter-Wavelet lässt sich für die Wavelet-Transformation unmittelbar aus der komplexen Bewegungsgleichung ableiten. Bei einer linearen Drift ist das Mutter-Wavelet eine Sinusschwingung. Bei einer Drift mit Beschleunigungskomponente ist das Mutter-Wavelet ein sogenannter Chirp, der auch als linear frequenzmoduliertes Signal bezeichnet wird. Bei einer Drift mit einer Ruck-Komponente ist das Mutter-Wavelet ein quadratisch frequenzmoduliertes Signal und so weiter. Über eine mathematisch für sich genommen bekannte geeignete Transformation können dann die Radialkomponenten der Driftgeschwindigkeit $\mathbf{v}_0$ des Offsets, der Driftbeschleunigung $\mathbf{a}_0$, des Driftrucks $\mathbf{r}_0$ usw. geschätzt werden.

Es wäre natürlich auch möglich geeignete Mutter-Wavelets für zeitlich nicht äquidistant aufgenommen Signale zu bestimmen.

Generell sei an dieser Stelle angemerkt, dass die Komponenten nicht nur über geeignete Transformationen geschätzt werden können, sondern alternativ auch über mathematisch für sich genommen bekannte modellbasierte Ansätze. Auch die Übertragung dieser Verfahrensweise auf nicht-sinusförmige Signale ist mathematisch für sich genommen bekannt. Auch die Übertragung dieser Verfahrensweise auf zeitlich nicht äquidistant abgetastete Signale ist mathematisch für sich genommen bekannt.

Alle bisherigen Ausführen können unmittelbar auch auf Systeme übertragen werden, bei dem der wellenbasierte Sensor SS zu einem kooperativen Ziel, z.B. zu einem kohärent reflektierenden Backscatter-Transponder an oder als dem Objekt O misst.

Bei Anwendung mit kooperativen Zielen besteht zudem die Möglichkeit, zusätzlich die Geschwindigkeitsmessung bereits nach der ersten Messung am ersten Aperturpunkt bzw. an der ersten Sensorposition $\mathbf{a}_n$ mittels Auswertung der Dopplerverschiebung zu ermitteln. Dadurch können die vorher gewonnen Größen wie die Driftgeschwindigkeit $\mathbf{v}_0$ bzw. die Driftbeschleunigung $\mathbf{a}_0$ und der Driftruck $\mathbf{r}_0$ genauer bzw. nach technisch einfacheren Rekonstruktionsvorschriften gewonnen werden. Z.B. kann die Driftbeschleunigung $\mathbf{a}_0$ aus der FFT der Driftgeschwindigkeiten $\mathbf{v}_0$ und damit

als linearer Zusammenhang gewonnen werden. Für nicht kooperative Ziele ist das theoretisch auch möglich.

Durch eine kleine Modifikation können alle bisherigen Ausführen ebenfalls auf Anordnungen übertragen werden, bei denen eine Signalquelle ein Signal emittiert, dass nicht in einem phasenkohärenten Bezug zum Empfänger steht. Beispielsweise kann sich der aktive Sender TX, welcher das Sendesignal s(t) aussendet, am Objekt O selber befinden, so dass vom Objekt nicht das aktiv oder passiv reflektierte Objektsignal, sondern das Sendesignal selbst abgestrahlt wird. Optional kann am Objekt auch ein vom Sensor ausgesendetes Signal von einem Transponder aufgenommen, verarbeitet und zurückgesendet werden und die Quelle des zum Sensor SS gesendeten Objektsignals sein. In diesen Fällen wird das Signal, das von einem Objekt O bzw. von einem Transponder ausgestrahlt wird von zumindest zwei Empfängern, die sich in zueinander bekanntem Abstand befinden, aufgezeichnet und die Phasendifferenz zwischen diesen beiden von den Empfängern erfassten Signalen wird in der weiteren Auswertung verwendet. Zur Bestimmung der Phasendifferenz $\Delta\varphi$ wird dann beispielsweise das erste der erfassten Signale mit dem konjugiert komplexen des zweiten der erfassten Signale multipliziert. Insbesondere sind in diesem Zusammenhang für sich genommen bekannte Sekundärradarsysteme einsetzbar.

Gemäß einem ersten Ausführungsbeispiel kann eine Umsetzung rein beispielhaft erfolgen auf einen Umgebungssensor und ein Odometer für Gabelstapler, auf automatisch geführte Fahrzeuge (AGV / Automated Guided Vehicles), auf mobile Roboter oder sonstige Fahrzeuge, die z.B. in einer Industriehalle oder Industrieumgebung oder auch auf der Straße fahren, oder auch auf Roboter, welche z.B. im Haushalt zum Staubsaugen etc. eingesetzt werden.

Der Sensor SS ist mit einer rundstrahlenden Antenne A oder einer Antennenanzahl N von rundstrahlenden Antennen A mit der Antennenanzahl N >= 1 am beispielsweise Fahrzeug angeordnet. Das Fahrzeug fährt und mit der Antenne A bzw. den N Antennen und es wird die Anzahl M der Messungen an den gemessenen scheinbaren Sensorpositionen $a_n$ gemacht. Basierend auf dieser Anzahl M der Messungen wird ein Bild aus Bildpunkten b(x,y,z) der Umgebung mit der beschriebenen Verfahrensweise berechnet. Anstelle der Antennenanzahl N der Antennen A kann z.B. auch eine mechanisch exakt bewegbare Antenne, z.B. auf einer Pendelplatte oder auf einer rotierenden Plattform angebracht ist, verwendet werden, um so nacheinander die Antennenanzahl N der gemessenen scheinbaren bzw. angenommenen Antennen- bzw. Sensorpositionen $a_n$ zu erzeugen.

Bei der Berechnung des Bildes bzw. der Bildpunkte b(x,y,z) bzw. bei der Bestimmung der angenommenen Apertur- bzw. Sensorpositionen $a_n$ kann ein bekannter Anteil der FahrzeugGeschwindigkeit des Fahrzeuges, der z.B. über einen Rad-Drehgeber und einen Lenkwinkel oder über Beschleunigungssensoren bestimmt wird, mit genutzt werden. Die angenommene synthetische Apertur kann aber auch allein durch die geometrische Position der Antennenanzahl N der Antennen A bzw. Sensorpositionen $a_n$ definiert sein.

Allein das derart aus Bildpunkten b(x,y,z) bestimmte Bild der Umgebung kann zur Navigation eines Fahrzeuges sehr hilfreich sein. Hervorzuheben ist hierbei, dass mit dem verwendeten Verfahren auch dann ein scharfes rekonstruiertes Bild erzeugt werden kann und somit z.B. Hindernisse und eine Fahrspur detektiert werden können, wenn eine Eigengeschwindigkeit des Fahrzeuges und somit die Aperturpositionen, d.h. verfahrensgemäß die gemessenen scheinbaren Sensorpositionen $a_n$ a priori nicht exakt bekannt sind.

Im nächsten Schritt kann dann bei Bedarf für alle stark reflektierende Objekte O mit bekannter Eigengeschwindigkeit, also vorzugsweise für ortsfeste Objekte wie z.B. Wände, Maschinen, Gerüste, Bäume, Leitplanken im Bild vom Umfeld des Fahrzeuges basierend auf dem beschriebenen Verfahren die radiale Relativgeschwindigkeit $rv_r$ zum Fahrzeug bestimmt werden. Basierend auf mehreren unterschiedlich ausgerichteten radialen Relativgeschwindigkeiten $rv_r$ kann dann die momentane Relativgeschwindigkeit $v_r$ als der Fahrzeug-Geschwindigkeitsvektor des Fahrzeugs relativ zu dem zumindest einen Objekt berechnet werden. Mit den oben genannten erweiterten Verfahren könnten natürlich auch ein Beschleunigungsvektor des Fahrzeuges oder Bewegungskomponenten höherer Ordnung bestimmt werden.

Sobald die Fahrzeuggeschwindigkeit bekannt ist, können auch Winkellagen der einzelnen Rückstreuzentren als derartigen Objektpositionen $P(r)$ über die Relation ihrer Geschwindigkeit zur vorbestimmten Fahrzeug-Gesamtgeschwindigkeit näherungsweise bestimmt werden.

Wenn die vektorielle Fahrzeuggeschwindigkeit durch eine anderweitige Messung bekannt ist, können auch Winkellagen der einzelnen Rückstreuzentren als derartige Objektpositionen $P(r)$ über die Relation ihrer Geschwindigkeit zur vorbestimmten Fahrzeug-Gesamtgeschwindigkeit bestimmt werden.

Bei der Aufnahme der vom Objekt ausgehenden Wellen bzw. Objektsignale os als Messwerte im Sensor SS kann eine Eindeutigkeit der räumlichen Abtastung der reflektierten Wellen entweder mittels ausreichend hoher Messrate oder Anti-Aliasing-Ansätzen sichergestellt werden.

Zur Bestimmung oder Schätzung der Bewegung des Fahrzeuges und zur Unterscheidung aus Sicht des Fahrzeugs zwischen ortsfesten Objekten und bewegten Objekten O als Quellen der Objektsignale os wird vorzugsweise ein statistisches Filter wie z.B. ein Kalman-Filter oder ein Partikel-Filter verwendet.

Besonders exakt und vorteilhaft kann die Bewegung eines Fahrzeuges bestimmt werden, wenn der Sensor SS mit einer Antennenanzahl N von Antennen A auf dem Fahrzeug zu kooperativen Zielen wie z.B. Transpondern als dem oder den Objekten O misst. Schon ein einzelner Transponder an bekannter Position, d.h. mit bekannter Raumkoordinate $r$ kann ausreichen, um mit dem beschriebenen Verfahren die räumliche Position, die Orientierung und die Geschwindigkeit des Fahrzeuges sehr exakt zu bestimmen und zwar auch dann, wenn die Eigengeschwindigkeit des Fahrzeuges nicht exakt bekannt ist. Ermöglicht wird somit verfahrensgemäß nicht nur die Bestimmung eines Abbildes eines Objektes oder von dessen Position aus Sicht eines bewegten Sensors SS. Umgekehrt kann bei bekannter oder konstanter Objektposition $\mathbf{P}(\mathbf{r})$ bzw. bekannter oder konstanter Objektbewegung auch eine für sich genommen unbekannte Position bzw. Bewegung des den Sensor SS tragenden Gerätes bestimmt oder zumindest geschätzt werden.

Gemäß einem zweiten Ausführungsbeispiel kann das Verfahren auch zur Ortung eines Transponders relativ zu einem mobilen, z.B. hand-getragenen Lesegerät als bzw. mit dem Sensor SS vorteilhaft verwendet werden. So kann z.B. ein mobiles Transponder-Lesegerät zusätzlich mit Beschleunigungssensoren ausgerüstet werden. Über zweifache Integration kann dann z.B. aus den Beschleunigungsdaten die Anzahl M der angenommenen Aperturstützpunkte bzw. Sensorpositionen $\mathbf{a}_n$ bestimmt werden. Aufgrund der üblichen Fehler bei der Ableitung von Positionswerten aus Daten von Beschleunigungssensoren werden die Positionsdaten ungenau sein und in aller Regel kaum für synthetische Aperturverfahren geeignet sein. Bei Anwendung der beschrieben Verfahrensweise können diese Fehler aber toleriert werden, da die Fehler üblicherweise einem Determinismus unterliegen, der durch die mehrfache Integration und die Sensoreigenschaften hervorgerufen wird.

Der Ablauf einer Messung kann beispielhaft wie folgt aussehen: Ein Benutzer schwenkt ein Lesegerät mit der Antennenanzahl N der Antennen A mit N >=1 auf einer beliebigen Sensorbahn sw z.B. hin und her und auf und ab und vor und zurück oder er bewegt das Lesegerät in Kreisbahnen im Raum und erzeugt so eine synthetische Apertur bzw. die Anzahl M der angenommenen Sensorpositionen $\mathbf{a}_n$ als Aperturstützpunkten. Die Sensorpositionen $\mathbf{a}_n$ werden im Gerät über die Beschleunigungssensoren geschätzt. Mit dem vorstehend beschriebenen Verfahren wird dann der Ort des Transponders als oder an dem Objekt O relativ zu der beschriebenen synthetischen Apertur bestimmt. Die Ortsangabe des Transponders als oder an dem Objekt O kann zwar nie absolut exakt sein, sie gibt dem Benutzer aber einen sehr guten Hinweis zum Auffinden des Transponders bzw. des Objektes O.

Sehr vorteilhaft ist das beschriebene Verfahren auch zum gleichzeitigen Lesen mehrerer Transponder einsetzbar. Durch die örtliche Auflösung der Transponder im aus den Bildpunkten b(x,y,z) gebildeten Bild ist zum einen die Lage der Transponder bzw. der Objekte O zueinander und somit ihre Anordnung im Raum vor dem Lesegerät als dem Sensor SS bestimmbar und zum anderen ergeben sich sehr leistungsfähige Möglichkeiten zum sogenannten Raummultiplexverfahren. Diese Verfahren zur Ortung von Transpondern und zum Raummultiplex können besonders vorteilhaft bei sogenannten Backscatter-Transpondern eingesetzt werden, wie sie im Bereich der hochfrequenten Identifikation (RFID: Radio Frequency IDentification) für sich genommen bekannt sind.

Bezugszeichenliste:

| | |
|---|---|
| A | Antenne |
| $\mathbf{a}_0$ | Driftbeschleunigung |
| $\mathbf{a}_n=(x_n, y_n, z_n)^T$ | gemessene scheinbare bzw. angenommene n-te Sensorposition |
| $\mathbf{a}_{n\_real}$ | reale Sensorposition |
| b(x,y,z) $\mathbf{B}(n)$ | Bildpunkt unbekannter Offset zwischen tatsächlichen und scheinbar gemessenen Sensorpositionen $\mathbf{a}_n$ |
| c | Ausbreitungsgeschwindigkeit einer Welle |
| C | Prozessor |
| CM | Speichereinrichtung |
| $\mathbf{e}_n(t)$ | Echosignal |
| $e_r(n)$ | Signal, aus der Anzahl M von Positionen $e_n(t=\tau_n)$ Funktionswert zu $\tau_n$, mit 1<n<M der Anzahl M der gemessen Echosignale |
| $E_n(\omega)$ | Echospektrum |
| $F_n(\mathbf{a}_n,\mathbf{r},\omega)$ | ideale Funktion $F_n(\mathbf{a}_n,\mathbf{r},\omega)$ |
| M | Anzahl der Echosignale und Sensorpositionen |
| n | Element der Sensorpositionen 1, 2, ... n, ... M |
| n(t) | additives weißes Gauss'sches Rauschen |
| N | Antennenanzahl |
| N(w) | Rauschspektrum |
| O | Objekt |
| os | Objektsignal |
| ow | Objektbahn |
| p | Übertragungswege |
| P | Streupunkt am Objekt |

| P (r) | Objektposition $\mathbf{P}(r)=\mathbf{P}_{O1}=(x_{O1},y_{O1},z_{O1})^{T}$ |
|---|---|
| $\mathbf{P}_{TP1} = (x_{TP1},y_{TP1},z_{TP1})^{T}$ | ideale Reflektor-Position |
| $\mathbf{r}$ | Raumkoordinate des Objektes O |
| $\mathbf{r}_0$ | Driftruck |
| $\mathbf{r}_n$ | direkter Weg |
| $rv_r$ | radiale Relativgeschwindigkeit |
| RX | Empfänger |
| SS | Sensor |
| $s_n(t)$ | Sendesignal |
| $S(\omega)$ | Sendespektrum |
| sw | Sensorbahn |
| t | Zeit |
| $T_a$ | Abtastzeit $T_a$ |
| TX | Sender |
| $\mathbf{v}_0$ | Driftgeschwindigkeit des Offsets |
| $\mathbf{v}_r$ | momentane Relativgeschwindigkeit |
| $\mathbf{v}_m$ | bekannter relativer Anteil von $\mathbf{v}_r$ |
| $\Delta\mathbf{v}$ | unbekannter relativer Anteil von $\mathbf{v}_r$ |
| $\mathbf{v}_{sr},\mathbf{v}_{or}$ | Sensor- bzw. Objekt-Momentangeschwindigkeit |
| $\mathbf{v}_{sm},\mathbf{v}_{om}$ | bekannter Sensor- bzw. Objekt-Anteil von $\mathbf{v}_{sr},\mathbf{v}_{or}$ |
| $\Delta\mathbf{v}_s, \Delta\mathbf{v}_o$ | unbekannter Sensor- bzw. Objekt-Anteil von $\mathbf{v}_{sr},\mathbf{v}_{or}$ |
| x, y, z | kartesisches Koordinatensystem |
| $\mathbf{x}_0$ | Offset für die erste Sensorposition $\mathbf{a}_0$ |
| $\alpha_n$ | Direktweg-Dämpfung |
| $\alpha_p$ | über $\alpha_n$ hinausgehende Dämpfung für jeden der Übertragungswege |
| $\varphi$ | Phase eines Phasenverlaufs der Echosignale $e_n(t{=}\tau_n)$ |
| $\varphi_r(n)$ | Restphase, Restphasenverlauf, als Phase des Signals $e_r(n)$ |
| $\Delta\varphi$ | Phasendifferenz |
| $\tau_n$ | Direktweg-Signallaufzeit |
| $\tau_p$ | mögliche Laufzeitverlängerungen |
| $\omega$ | Kreisfrequenz |

**Patentansprüche**

1. Abbildungsverfahren zur Abbildung oder zur Lokalisierung eines Objektes (O) mit einem wellenbasierten Sensor (SS) mittels synthetischer Apertur, bei dem

- von dem Objekt (O) von zumindest einer Objektposition ($\mathbf{P}(r)=\mathbf{P}_{O1}=(x_{O1},y_{O1},z_{O1})^{T}$) ein Wellenfeld als ein Objektsignal (os) ausgeht, wobei das Objektsignal (os) erzeugt wird, indem entweder das Objekt (O) mit zumindest einer Wellenquelle bestrahlt wird und das Objekt (O) als Reaktion dieses Wellenfeld reflektiert oder streut oder indem das Objekt (O) selbständig eine Welle emittiert, und
- dieses vom Objekt (O) ausgehende Objektsignal (os) von dem zumindest einen Sensor (SS) an zumindest einer Sensorposition ($\mathbf{a}_n=(x_n, y_n, z_n)^{T}$) empfangen wird und dabei der Sensor (SS) bzw. die Sensoren (SS) und das Objekt (O) eine Anzahl (M) von zumindest zwei räumlichen Positionen relativ zueinander einnehmen und **dadurch** die synthetische Apertur bilden und
- an jeder dieser Sensorpositionen ($\mathbf{a}_n=(x_n, y_n, z_n)^{T}$) durch den Sensor (SS) ein Echosignal ($\mathbf{e}_n$) aufgenommen wird,
- aus den Echosignalen ($\mathbf{e}_n(t)$) eine Anzahl (M) größer 1 mehrerer der Echosignale ($\mathbf{e}_n(t)$) gebildet wird, bei denen der Amplituden- und/oder der Phasenverlauf eine Funktion einer Signallaufzeit oder einer Signallaufzeitdifferenz oder eine Funktion einer Entfernung oder einer Entfernungsdifferenz zwischen dem Objekt (O) und zumindest einem der Sensoren (SS) ist, und
- aus dieser Anzahl (M) größer 1 der Echosignale ($\mathbf{e}_n(t)$) zumindest ein Funktionswert $e_n(t{=}\tau_n)$ je Echosignal ($\mathbf{e}_n(t)$) entnommen wird, wobei die entnommenen Funktionswerte einer angenommenen Raumkoordinate ($\mathbf{r}=(x,y,z)^{T}$) des Objekts (O) zugeordnet sind,

**dadurch gekennzeichnet dass**,

- die Anzahl (M) der entnommen Funktionswerte $e_n(t=\tau_n)$ der Echosignale ($\mathbf{e}_n(t)$) an deren angenommenen Sensorpositionen ($\mathbf{a}_n$) einen bestimmbaren, deterministischen und nicht konstanten Restphasenverlauf ($\varphi_r(n)$) aufweist, der von einer Abweichung realer Sensorpositionen ($\mathbf{a}_{n\_real}$) von angenommenen oder gemessenen Sensorpositionen ($\mathbf{a}_n$) herrührt und/oder von einer Bewegung des Objektes (O) herrührt, und dass

- dieser Restphasenverlauf ($\varphi_r(n)$) analysiert oder kompensiert wird und

- auf dem Ergebnis der Analyse oder der Kompensation zumindest ein Bildpunkt (b(x,y,z)) des Objektes (O) oder die Objektposition ($\mathbf{P}(\mathbf{r})$) des Objektes (O) oder die Relativbewegung ($\mathbf{v}_r$, $\mathbf{r}_0$) des Objektes (O) bestimmt oder geschätzt wird.

2. Verfahren nach Anspruch 1, bei dem der Determinismus des Restphasenverlaufs darin besteht, dass er sich linear mit der Zeit (t) oder dem Index (n) ändert, oder dass die entnommenen Funktionswerte eine sinusförmige Funktion beschreiben und dass mit einem Frequenzanalyseverfahren eine Amplitude und/oder eine Frequenz und/oder die Phase der sinusförmigen Funktion bestimmt wird.

3. Verfahren nach Anspruch 2, bei dem aus der Amplitude der sinusförmigen Funktion ein Wahrscheinlichkeitswert bestimmt wird, der aussagt, ob von der Raumkoordinate ($\mathbf{r}=(x,y,z)^T$) des Objekts (O) ein Wellenfeld ausgeht oder nicht.

4. Verfahren nach Anspruch 2 oder 3, bei dem aus der Frequenz der sinusförmigen Funktion die Relativbewegung ($\mathbf{v}_r$, $\mathbf{r}_0$) zwischen dem Objekt (O) und dem zumindest einen Sensor (SS) bestimmt wird.

5. Verfahren nach Anspruch 1, bei dem eine Phasendifferenz von zumindest 2 der entnommenen Funktionswerte gebildet wird und diese Phasendifferenz zum Bestimmen der Relativbewegung ($\mathbf{v}_r$, $\mathbf{r}_0$) zwischen dem Objekt (O) und dem zumindest einen Sensor (SS) verwendet wird.

6. Verfahren nach einem vorstehenden Anspruch, bei dem eine Fourier-Transformation im Rahmen der Analyse der entnommenen Funktionswerte oder von deren Phasenverläufen angewendet wird.

7. Verfahren nach Anspruch 6, bei dem zum Rekonstruieren oder zum Schätzen der Bildpunkte (b(x,y,z)) und/oder der räumlichen Driftgeschwindigkeit ($\mathbf{v}_0$) eines Offsets (B(n)) zwischen dem Objekt (O) und dem zumindest einen Sensor (SS) die Fouriertransformation auf zumindest einen Teil von Messwerten von zumindest zwei verschiedenen d Echosignalen ($\mathbf{e}_n$) angewendet wird und ein Maximum davon bestimmt wird, dies insbesondere durchgeführt wird gemäß

$$b(x, y, z) = \max\left\{ \left\| FFT\left\{ e_n(t = \tau_n) \right\} \right\| \right\} \,.$$

8. Verfahren nach Anspruch 1, bei dem der Restphasenverlauf ($\varphi_r(n)$) der Anzahl (M) entnommener Funktionswerte differenziert wird und **dadurch** aus den entnommenen Funktionswerten neue Funktionswerte gebildet werden und aus den neu gebildeten Funktionswerten solche Bildpunkte (b(x,y,z)) oder ein Bild oder die Objektposition ($\mathbf{P}(\mathbf{r})$) oder die Relativbewegung ($\mathbf{v}_r$, $\mathbf{r}_0$) des Objektes (O) bestimmt wird.

9. Verfahren nach Anspruch 8, bei dem die Differentiation des Restphasenverlaufes ($\varphi_r(n)$) solange wiederholt wird, bis sich ein linearer oder konstanter Phasenverlauf in den neu gebildeten Funktionswerten einstellt.

10. Verfahren nach einem der Ansprüche 1, 8 oder 9, bei dem der Determinismus des Phasenverlaufs darin besteht,

- dass der Phasenverlauf der Echosignale und eine Phase ($\varphi$) aufweist, wobei sich die Phase entsprechend einem quadratischen oder kubischen Funktionsverlauf mit der Zeit ändert oder wobei die entnommen Funktionswerte eine linear oder quadratisch frequenzmodulierte Funktion beschreiben, und

- dass mit einem mathematischen Analyseverfahren zumindest ein den Funktionsverlauf charakterisierender Parameter, insbesondere ein linearer oder kubischer Verlauf, bestimmt wird.

11. Verfahren nach einem vorstehenden Anspruch, bei dem die Messungen an den Sensorpositionen ($\mathbf{a}_n$) in einem konstanten Zeitabstand mit einer Abtastzeit ($T_a$) durchgeführt werden.

**12.** Verfahren nach einem vorstehenden Anspruch, bei dem eine reale Sensorposition ($a_{n\_real}$) bestimmt wird aus einer Summe einer scheinbar gemessenen Sensorposition ($a_n$) und einem Offset ($B(n)$), wobei der Offset ($B(n)$) als Funktion einer scheinbar gemessenen n-ten Sensorposition ($a_n$) durch den Funktionsverlauf charakterisierender Parameter beschrieben ist gemäß insbesondere

$$\mathbf{B(n)} = \mathbf{x_0} + \mathbf{v_0} \cdot n + \frac{1}{2}\mathbf{a_0} \cdot n^2 + \frac{1}{3}\mathbf{r_0} \cdot n^3 + ...$$

mit $\mathbf{x_0}$ als einem Offset für den ersten Aperturpunkt bzw. für die erste Sensorposition $\mathbf{a_1}$, $\mathbf{v_0}$ als einer Driftgeschwindigkeit, $\mathbf{a_0}$ als einer Driftbeschleunigung und $\mathbf{r_0}$ als einem Driftruck.

**13.** Verfahren nach einem vorstehenden Anspruch, bei dem die analysierten Echosignale ($\mathbf{e_n}$) von sowohl zumindest zwei verschiedenen scheinbar gemessenen Sensorpositionen ($\mathbf{a_n}$) als auch zumindest zwei verschiedenen Objektpositionen ($\mathbf{P_{On}}$) erfasst werden.

**14.** Verfahren nach einem vorstehenden Ansprüche zur Bestimmung einer Relativgeschwindigkeit ($\mathbf{v_r}$) zwischen dem Sensor (SS) und dem Objekt (O) als der Relativbewegung ($\mathbf{v_r}$, $\mathbf{r_0}$) oder einer Bewegungskomponente davon.

**15.** Vorrichtung mit einem wellenbasierten Sensor (SS) zum Aufnehmen einer Abfolge von Echosignalen ($\mathbf{e_n}$) eines Objektes (O) und mit einer Logik und/oder mit einem auf zumindest ein Programm zugreifenden Prozessor (C), wobei die Logik und/oder der Prozessor (C) ausgestaltet sind zur Durchführung eines Verfahrens nach einem vorstehenden Anspruch.

**16.** Vorrichtung nach Anspruch 15 mit einem Speicher (CM) oder einer Schnittstelle zu einem Speicher, wobei in dem Speicher (CM) das Programm gespeichert ist.

Fig. 1

Fig. 2

Fig. 3

scheinbar gemessende Apertur $a_n$

reale Apertur $a_{n\_real}$

0.020

y-Achse in m

0.010

0

0.01    0.02    0.03

x-Achse in m

## Fig. 4

$z$

$O$

$P(r)=P_{O1}=(x_{O1},y_{O1},z_{O1})^T$

os

os

os

os

$r$

$r_1$

$r_n$

$r_M$

$y$

$a_1$

$a_n$

$s_n(t)$

SW

$a_1=(x_1,y_1,z_1)^T$

$A$

$a_M=(x_M,y_M,z_M)^T$

SS

$a_2=(x_2,y_2,z_2)^T$

TX    RX

C    CM

$a_n=(x_n,y_n,z_n)^T$    $e_n(t)$

$x$

## Fig. 5 (Stand der Technik)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2006072471 A
- DE 19910715 C2
- EP 0550073 B1
- DE 19512787 A1
- DE 10157931 C2
- DE 102006005281
- DE 102005037583

### In der Beschreibung aufgeführte Nicht-Patentliteratur

- **Klausing ; W. Holpp.** H. Radar mit realer und synthetischer Apertur. 2000, 213 ff
- **M. Younis ; C. Fischer ; W. Wiesbeck.** Digital beamforming in SAR systems. *Geoscience and Remote Sensing, IEEE Transactions on,* 2003, vol. 41, 1735-1739
- **M. Vossiek ; V. Mägori ; H. Ermert.** An Ultrasonic Multielement Sensor System for Position Invariant Object Identification. *IEEE International Ultrasonics Symposium,* 1994
- **M. Vossiek.** Ein Ultraschall-Mehrwandlersystem zur lageunabhängigen Objekterkennung für die industrielle Automation. *Fortschritt-Berichte VDI, Reihe 8: Mess-, Steuerungs- und Regelungstechnik,* 1996, vol. 564
- **Stelzer,A. ; Fischer,A. ; Vossiek,M.** A New Technology for Precise Position Measurement-LPM. *Microwave Symposium Digest, 2004, IEEE MTT-S International,* 06. Juni 2004, vol. 2, 655-658
- **R. Gierlich ; J. Huttner ; A. Ziroff ; M. Huemer.** Indoor positioning utilizing fractional-N PLL synthesizer and multi-channel base stations. *Wireless Technology, 2008, EuWiT 2008, European Conference on,* 2008, 49-52
- **S. Roehr ; P. Gulden ; M. Vossiek.** Precise Distance and Velocity Measurement for Real Time Locating in Multipath Environments Using a Frequency-Modulated Continuous-Wave Secondary Radar Approach. *IEEE Transactions on Microwave Theory and Techniques,* 2008, vol. 56, 2329-2339
- **S. L. Marple, Jr.** A tutorial overview of modern spectral estimation. *Acoustics, Speech, and Signal Processing, 1989, ICASSP-89, 1989 International Conference,* 1989, vol. 4, 2152-2157